# EUROPÄISCHE PATENTSCHRIFT

(11) **EP 1 572 484 B1**
(45) Veröffentlichungstag und Bekanntmachung des Hinweises auf die Patenterteilung: **31.05.2006**
(21) Anmeldenummer: 02799750.1
(22) Anmeldetag: 20.12.2002
(51) Int. Cl.: B60J 10/04, B60J 10/06

(54) **SOFTTOP-FAHRZEUGVERDECK MIT EINEM DICHTUNGSELEMENT**
SOFT TOP MOTOR VEHICLE COVER WITH A SEALING ELEMENT
CAPOTE DE VEHICULE MUNIE D'UN ELEMENT D'ETANCHEITE

(43) Veröffentlichungstag der Anmeldung: 14.09.2005
(73) Patentinhaber: CTS Fahrzeug-Dachsysteme GmbH, 74321 Bietigheim-Bissingen (DE)
(72) Erfinder: HALTERMANN, Frank, 21258 Heidenau (DE); ZACH, Holger, 89331 Burgau (DE)
(74) Vertreter: Müller, Gottfried
(86) Internationale Anmeldenummer: PCT/EP2002/014653
(87) Internationale Veröffentlichungsnummer: WO 2004/058529

(56) Entgegenhaltungen:
- EP-A- 0 521 611
- DE-A- 19 801 870
- DE-U- 29 916 352
- DE-U- 29 916 383
- US-B1- 6 189 950
- PATENT ABSTRACTS OF JAPAN vol. 1999, no. 10, 31. August 1999 (1999-08-31) -& JP 11 129766 A (NISHIKAWA RUBBER CO LTD;MITSUBISHI MOTORS CORP), 18. Mai 1999 (1999-05-18)

## Beschreibung

Die Erfindung bezieht sich auf ein Softtop-Fahrzeugverdeck mit einem Dichtungselement nach dem Oberbegriff des Anspruches 1.

Derartige Softtops weisen ein verstellbares Verdeckgestänge sowie einen darauf aufgespannten Verdeck-Bezugstoff auf und können zwischen einer Schließposition, in welcher ein vorderer Dachbügel des Verdeckgestänges an einem Windschutzscheibenrahmen verriegelt ist, und einer geöffneten Ablageposition verstellt werden, in welcher das Softtop in einem heckseitigen Ablageraum verstaut ist. Um in Schließposition des Verdecks eine wasser- und winddichte Verbindung zwischen den Seitenscheiben und den die Oberkante und die Seitenkante einfassenden Dachabschnitten herzustellen, sind fest mit dem Verdeck verbundene Dichtungselemente vorgesehen, die in der Schließposition von den zugewandten Kanten der Seitenscheiben beaufschlagt werden. Die Dichtungselemente sind üblicherweise an die zugeordneten Gestängeteile angeschraubt, wobei über die Länge des Dichtungselementes eine Mehrzahl von Verschraubungspunkten vorgesehen sind, um eine sichere Anbindung des Dichtungselementes an das Fahrzeugdach zu schaffen.

Bei diesen Ausführungen muss darauf geachtet werden, dass auf das Dichtungselement wirkende Belastungen, hervorgerufen durch ein Öffnen oder Schließen des Fahrzeugdaches oder ein Betätigen der Seitenscheiben, nicht zu Beschädigungen des Dichtungsmaterials, beispielsweise in Form von Rissen, führen. Im Bereich der Schraubverbindungen wirken näherungsweise punktförmige Belastungen auf das Dichtungselement, die lokale Spannungsspitzen im Dichtungsmaterial bewirken, wodurch die Beschädigungsgefahr erhöht wird. Die Schraubverbindungen bedeuten außerdem einen verhältnismäßig hohen Montageaufwand.

Ein ähnliches Dichtungselement ist auch in der Druckschrift DE 198 01 870 A1 beschrieben. In den Dichtkörper ist eine Profilschiene integriert, welche die Belastungsfähigkeit des Dichtungselementes verbessert und insbesondere auch zu einer gleichmäßigen, flächenmäßigen Belastung des Dichtungsmaterials beim Verschrauben mit einem Dachteil führt. Die Belastung ist zwar in dieser Ausführung herabgesetzt, jedoch setzt auch dieses Dichtungselement auf Grund der Schraubverbindungen einen hohen Montageaufwand zur Befestigung am zugeordneten Dachteil voraus.

Zu beachten ist außerdem, dass im Falle eines Softtops der Verdeck-Bezugstoff ebenfalls im Seitenbereich des Daches angebunden werden muss. Hierbei ist darauf zu achten, dass die Befestigungen für den Bezugstoff und für das Dichtungselement sich nicht gegenseitig behindern. Auch die Befestigung des Verdeck-Bezugstoffes stellt einen nicht unerheblichen Montageaufwand dar.

Eine formschlüssige Aufnahme eines mit einer Seitenscheibe zusammenwirkenden Dichtelementes in einem Gestängeteil des Fahrzeugdaches ist in der Druckschrift DE 30 29 765 A1 offenbart. Das Dichtelement ist in einen Aufnahmeraum eingeklemmt, welcher Seitenwandungen mit nach innen gebogenen Stirnabschnitten aufweist, die in zugeordnete Nuten im Dichtelement eingreifen, welches zur Hälfte im Aufnahmeraum aufgenommen ist und zur Hälfte diesen überragt. Bei diesem Dichtelement kann zwar grundsätzlich auf eine Schraubverbindung verzichtet werden. Der Aufwand für die Anbindung des Verdeck-Bezugstoffes wird hierdurch aber nicht reduziert.

Aus der gattungsgemäßen Druckschrift DE 42 28 184 C1 ist es bekannt, den Verdeck-Bezugstoff eines Softtops mit Hilfe einer Profilschiene und eines Dichtungselementes mit einem Gestängeteil des Verdeckgestänges zu verbinden. Am Gestängeteil sind zwei einander zugewandte Absätze ausgebildet, die einen Aufnahmeraum begrenzen, in welchen in Montageposition ein Abschnitt des Dichtungselementes einragt. Der Verdeck-Bezugstoff ist auf die Profilschiene aufgeklebt, welche einen der Absätze formschlüssig hintergreift. Das Dichtungselement weist den Absätzen entsprechende Ausbuchtungen auf, welche ein Einsetzen des Dichtungselementes in den Aufnahmeraum erleichtern und ein formschlüssiges Festklemmen ermöglichen. Bei montierter Dichtung wird die Profilschiene vom Dichtkörper gegen den zugeordneten Absatz des Gestängeteils gedrückt und auf diese Weise formschlüssig an dem Absatz gehalten.

Bei dem in der DE 42 28 184 C1 gezeigten Gegenstand ist das Dichtungselement profilartig ausgebildet und klemmt die Profilschiene einschließlich des daran befestigten Verdeck-Bezugstoffes über einen längeren Abschnitt fest. Um ein versehentliches Lösen der Profilschiene und/oder der Dichtung sicher zu vermeiden, ist es erforderlich, dass die Absätze am Gestängeteil den in den Aufnahmeraum einragenden Abschnitt der Dichtung weit hintergreifen, wodurch jedoch die Montage des Dichtungselementes erheblich erschwert wird.

Der Erfindung liegt das Problem zu Grunde, ein Softtop-Fahrzeugverdeck mit einem Dichtungselement zu schaffen, bei welchem sowohl der Verdeck-Bezugstoff als auch das Dichtungselement mit geringem Montageaufwand am zugeordneten Dachteil befestigt werden können. Zweckmäßig sollen die auf den Verdeck-Bezugstoff und das Dichtungselement wirkenden Belastungen, welche von der Befestigung am Fahrzeugdach herrühren, so gering wie möglich sein.

Dieses Problem wird erfindungsgemäß mit den Merkmalen des Anspruches 1 gelöst. Die Unteransprüche geben zweckmäßige Weiterbildungen an.

Der Verdeck-Bezugstoff ist gemeinsam mit dem Dichtungselement in einen Aufnahmeraum formschlüssig einklemmbar, welcher sich in einem Gestängeteil des Verdeckgestänges befindet. Dadurch wird die Möglichkeit eröffnet, sowohl den Verdeck-Bezugstoff als auch das Dichtungselement ausschließlich mit Hilfe eines Formschlusses an dem Gestängeteil zu befestigen und auf weitere Befestigungsmaßnahmen wie Verschrauben, Vernieten oder Verkleben oder dergleichen zu verzichten. Dies hat den Vorteil, dass zum einen die Montage sowohl des Dichtungselementes als auch des Verdeck-Bezugstoffes in kürzerer Zeit durchgeführt werden kann und zum anderen auch lokale Kraftspitzen sowohl im Dichtungselement als auch im Verdeck-Bezugstoff vermieden werden können, da grundsätzlich über die formschlüssige Aufnahme eine gleichmäßigere Kraftverteilung zu erzielen ist. Da der Verdeck-Bezugstoff und das Dichtungselement in einen gemeinsamen Aufnahmeraum einragen, besteht im Hinblick auf die Gestaltung des den Aufnahmeraum aufweisenden Gestängeteils gegenüber herkömmlichen Befestigungssystemen kein oder kein wesentlicher Zusatzaufwand, da es nunmehr prinzipiell ausreicht, am Gestängeteil Formschlusselemente zum Festklemmen von Verdeck-Bezugstoff und Dichtungselement vorzusehen, wobei die Formschlusselemente vorteilhaft einteilig mit dem aufnehmenden Gestängeteil ausgeführt sind.

Bei diesen Formschlusselementen handelt es sich zweckmäßig um mindestens einen Klemmhaken, welcher in dem Aufnahmeraum angeordnet ist und entweder das Dichtungselement oder den Verdeck-Bezugstoff oder beide Bauteile formschlüssig hintergreift. Hierbei kann es zweckmäßig sein, lediglich das Dichtungselement formschlüssig vom Klemmhaken halten zu lassen und den Verdeck-Bezugstoff ohne unmittelbaren Kontakt zum Klemmhaken zwischen dem Dichtungselement und der Innenwand des Aufnahmeraums oder in sonstiger Weise ausschließlich mit dem Dichtungselement in formschlüssiger Weise zu verbinden. Es ist aber auch möglich, dass der Klemmhaken sowohl das Dichtungselement als auch den Verdeck-Bezugstoff formschlüssig festklemmt. Gegebenenfalls können auch mehrere Klemmhaken vorgesehen sein, welche über die Länge der Anbindung verteilt angeordnet sind, um eine möglichst gleichmäßige Krafteinleitung zu erzielen, und die gegebenenfalls jeweils entweder nur dem Dichtungselement oder nur dem Verdeck-Bezugstoff oder aber beiden zugeordnet sind. Die Klemmhaken können sich auch an beiden gegenüberliegenden Innenseiten der Innenwände befinden, um den Verdeck-Bezugstoff und das Dichtungselement zweiseitig festzuklemmen. Weiterhin kann es vorteilhaft sein, das Formschlusselement als ein über die Länge der Anbindung durchgehendes Element auszuführen, welches das Dichtungselement und/oder den Verdeck-Bezugstoff formschlüssig hintergreift.

Der Verdeck-Bezugstoff ist vorteilhaft mit einer Stoffleiste verbunden, die formschlüssig in den Aufnahmeraum einragt und in diesem festzuklemmen ist. Die Stoffleiste ist zweckmäßig aus Kunststoff gefertigt und kann insbesondere eine höhere Festigkeit als der Bezugstoff aufweisen, so dass auch lokale Krafteinleitungen in die Stoffleiste gleichmäßig über die Länge der Stoffleiste und den mit der Stoffleiste verbundenen Bezugstoff verteilt werden. Die Stoffleiste kann unmittelbar mit den Klemmhaken verbunden werden, die beispielsweise in Ausnehmungen in der Stoffleiste einragen und/oder vom Dichtungselement hintergriffen werden. Für eine raumsparende Anordnung kann es zweckmäßig sein, einen der Dicke der Stoffleiste entsprechenden Absatz am Dichtungselement vorzusehen, an welchem die Stoffleiste in Montagelage anliegt, insbesondere auf der Dichtungsaußenseite auf der der Innenwand des Aufnahmeraums zugewandten Seite.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines Softtop-Fahrzeugverdecks in Schließposition, dessen hintere C-Säulen einen nutförmigen Aufnahmeraum zur Aufnahme eines Dichtungselementes und einer Stoffleiste aufweisen,
- Fig. 2: eine C-Säule des Fahrzeugverdecks in freigeschnittener Ansicht,
- Fig. 3: eine Ansicht gemäß Schnittlinie III-III aus Fig. 2,
- Fig. 4: eine Draufsicht auf eine mit einem Verdeck-Bezugstoff vernähte Stoffleiste in schematischer Darstellung.

In den folgenden Figuren sind gleiche Bauteile mit gleichen Bezugszeichen versehen.

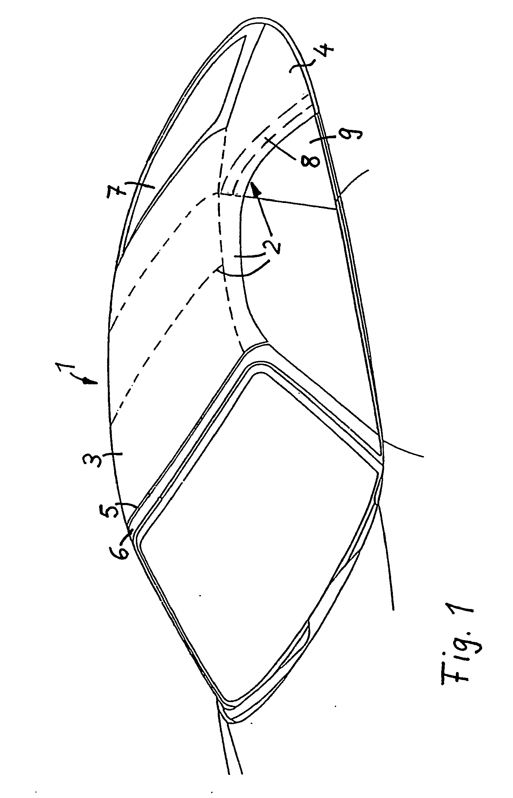

Bei dem in Fig. 1 dargestellten Fahrzeugverdeck 1 handelt es sich um ein Softtop mit einem Verdeck-Bezugstoff 3, welcher von einem Verdeckgestänge 2 getragen ist, das eine Mehrzahl einzelner beweglicher Gestängeteile umfasst, insbesondere auch hintere, seitliche C-Säulen 4. Das Fahrzeugverdeck 1 ist zwischen der dargestellten Schließposition, in welcher ein vorderer Dachabschnitt 5 an einem Windschutzscheibenrahmen 6 festgelegt ist, und einer geöffneten Ablageposition zu verstellen, in welcher das Fahrzeugverdeck 1 in einem heckseitigen Stauraum abgelegt ist.

Der Verdeck-Bezugstoff 3 umspannt mit Ausnahme der von einer Heckscheibe 7 eingenommenen Fläche die gesamte Oberseite des Fahrzeugverdeckes 1 einschließlich der seitlichen Gestängeteile. In den C-Säulen 4 ist ein nutförmiger, nach unten in Richtung der Fahrzeugkarosserie offener Aufnahmeraum 8 eingebracht, welcher zur Aufnahme und Befestigung des Verdeck-Bezugstoffes 3 und auch eines Dichtungselementes dient, an dem die oberen Kanten von hinteren Seitenscheiben 9 in Schließposition des Fahrzeugverdeckes 1 anliegen. Der Aufnahmeraum 8 erstreckt sich im wesentlichen über die Länge der C-Säule 4 und verläuft etwa parallel zu der der hinteren Seitenscheibe 9 zugewandten Seitenlinie der C-Säule.

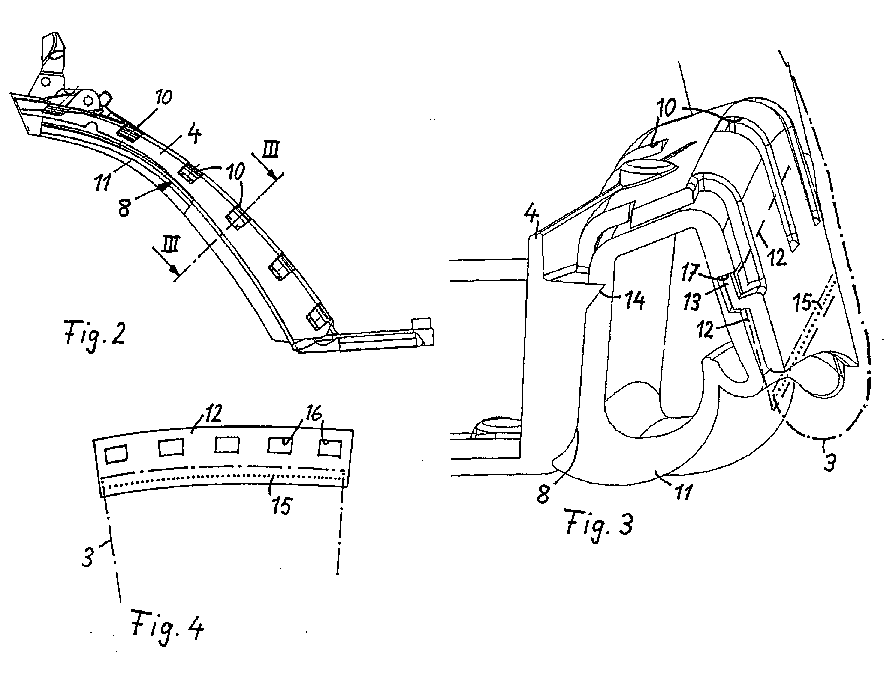

Wie Fig. 2 zu entnehmen, weist die C-Säule 4 Bogenform auf, wobei der Aufnahmeraum 8 sich auf der Innenseite des Bogens befindet. In den Aufnahmeraum 8 ist ein Dichtungselement 11 formschlüssig eingesetzt. Weitere Maßnahmen zur Befestigung des Dichtungselementes 11 im Aufnahmeraum 8 sind nicht vorgesehen. Auf der Außenseite sind über die Länge der C-Säule 4 verteilt eine Reihe von Aussparungen 10 vorgesehen, die sich jeweils zu beiden Seiten auf der dem Dach zugewandten Innenseite und der gegenüberliegenden Außenseite der C-Säule befinden. Jeder Aussparung 10 ist ein Klemmhaken an der C-Säule zugeordnet, welcher das Dichtungselement 11 formschlüssig hintergreift.

Diese Klemmhaken sind in Fig. 3 dargestellt und mit den Bezugszeichen 13 und 14 bezeichnet. Die Klemmhaken 13 und 14 auf gegenüberliegenden Innenwänden im Aufnahmeraum 8 hintergreifen formschlüssig zugeordnete Nuten bzw. Absätze an den anliegenden Außenwänden des Dichtungselementes 11. Die Klemmhaken 13 auf einer der Innenwände der Aufnahmeraum 8 hintergreifen zusätzlich formschlüssig auch eine Stoffleiste 12, welche über eine Naht 15 mit dem Verdeck-Bezugstoff 3 verbunden ist, der in den Fig. 3 und 4 mit strichpunktierter Linie dargestellt ist und über die Außenseite der C-Säule gespannt ist. Die Stoffleiste 12, welche insbesondere aus Kunststoff gefertigt ist, ist zwischen einer der Außenwände des Dichtungselementes 11 und der zugeordneten Innenwand des Aufnahmeraums 8 angeordnet. Der zugeordnete Klemmhaken 13 hintergreift sowohl die Stoffleiste 12 als auch das Dichtungselement 11. Hierfür sind, wie Fig. 4 zu entnehmen, in die Stoffleiste 11 Ausnehmungen bzw. Durchbrüche 16 eingebracht, in die die Klemmhaken 13 einragen. In die äußere Wandseite des Dichtungselementes 11 ist ein Absatz 17 eingebracht, an welchem die Stirnseite des Klemmhakens 13 und auch die äußere Kante der Stoffleiste 12 anliegen.

Die als Klemmhaken 13 und 14 ausgebildeten Formschlusselemente sichern das Dichtungselement 11 und die Stoffleiste 12 formschlüssig gegen unbeabsichtigtes Entfernen aus dem Aufnahmeraum 8 in der C-Säule 4.

## Patentansprüche

1. Softtop-Fahrzeugverdeck mit einem Dichtungselement, wobei das Fahrzeugverdeck (1) einen von einem Verdeckgestänge (2) getragenen Verdeck-Bezugstoff (3) aufweist und zwischen einer Schließposition und einer geöffneten Ablageposition zu verstellen ist, und wobei das Dichtungselement (11) an einem Gestängeteil (4) des Verdeckgestänges (2) gehalten und der Verdeck-Bezugstoff (3) gemeinsam mit dem Dichtungselement (11) in einem Aufnahmeraum (8) in einem Gestängeteil (4) des Verdeckgestänges (2) formschlüssig einklemmbar ist, derart, dass mindestens ein Klemmhaken (13, 14) in dem Aufnahmeraum (8) sowohl eine Stoffleiste (12), welche mit dem Verdeck-Bezugstoff (3) verbunden ist, als auch das Dichtungselement (11) formschlüssig hintergreift,
**dadurch gekennzeichnet,**
**dass** in dem Aufnahmeraum (8) eine Mehrzahl von Klemmhaken (13, 14) zum Festklemmen des Dichtungselements (11) und der Stoffleiste (12) angeordnet sind und dass die Klemmhaken (13, 14) in Montageposition in Absätze (17) im Dichtungselement (11) und in Durchbrüche (16) in der Stoffleiste (12) einragen.

2. Softtop-Fahrzeugverdeck nach Anspruch 1,
**dadurch gekennzeichnet,**
**dass** an der gegenüberliegenden Innenwand des Aufnahmeraums (8) mindestens ein weiterer Klemmhaken (13, 14) angeordnet ist.

3. Softtop-Fahrzeugverdeck nach Anspruch 1 oder 2,
**dadurch gekennzeichnet,**
**dass** die Stoffleiste (12) zwischen einer äußeren Wandseite des Dichtungselements (11) und einer Innenwand des Aufnahmeraums (8) eingeklemmt ist.

4. Softtop-Fahrzeugverdeck nach einem der Ansprüche 1 bis 3,
**dadurch gekennzeichnet,**
**dass** die Stoffleiste (12) an einem Absatz (17) auf der äußeren Wandseite des Dichtungselements (11) anliegt.

5. Softtop-Fahrzeugverdeck nach einem der Ansprüche 1 bis 4,
**dadurch gekennzeichnet,**
**dass** die Stoffleiste (12) aus Kunststoff gefertigt ist.

6. Softtop-Fahrzeugverdeck nach einem der Ansprüche 1 bis 5,
**dadurch gekennzeichnet,**
**dass** der Verdeck-Bezugstoff (3) mit der Stoffleiste (12) vernäht ist.

7. Softtop-Fahrzeugverdeck nach einem der Ansprüche 1 bis 6,
**dadurch gekennzeichnet,**
**dass** der Aufnahmeraum (8) zur formschlüssigen Aufnahme des Dichtungselements (11) und des Verdeck-Bezugstoffes (3) in C-Säulen (4) des Fahrzeugverdecks (1) ausgebildet ist.

## Claims

1. Soft top vehicle hood with a sealing element, the vehicle hood (1) having a hood covering material (3) supported by a hood linkage (2) and being adjustable between a closed position and opened position, and the sealing element (11) being held on a linkage part (4) of the hood linkage (2) and the hood cover material (3) together with the sealing element (11) being capable of being clipped in a positively interlocking fit in a stowage space (8) in a linkage part (4) of the hood linkage (2) in such a way that at least one clip hook (13, 14) in the stowage space (8) grips in a positively interlocking fit behind both a material strip (12), which is connected to the hood covering material (3), and the sealing element (11), **characterized in that** a plurality of clip hooks (13, 14) for clipping the sealing element (11) and the material strip (12) are arranged in the stowage space (8) and that the clip hooks (13, 14) in the assembly position project into steps (17) in the sealing element (11) and into openings (16) in the material strip (12).

2. Soft top vehicle hood according to Claim 1, **characterized in that** at least one further clip hook (13, 14) is arranged on the opposite inside wall of the stowage space (8).

3. Soft top vehicle hood according to Claim 1 or 2, **characterized in that** the material strip (12) is clipped between an outer wall side of the sealing element (11) and an inside wall of the stowage space (8).

4. Soft top vehicle hood according to any one of Claims 1 to 3, **characterized in that** the material strip (12) rests against a step (17) on the outer wall side of the sealing element (11).

5. Soft top vehicle hood according to any one of Claims 1 to 4, **characterized in that** the material strip (12) is made of plastic material.

6. Soft top vehicle hood according to any one of Claims 1 to 5, **characterized in that** the hood covering material (3) is stitched to the material strip (12).

7. Soft top vehicle hood according to any one of Claims 1 to 6, **characterized in that** the stowage space (8) is designed to receive the sealing element (11) and the hood covering material (3) with a positively interlocking fit in C-pillars (4) of the vehicle hood (1).

## Revendications

1. Capote souple de véhicule automobile avec un élément d'étanchéité, où la capote de véhicule (1) présente un tissu de recouvrement de capote (3) porté par une tringle de capote (2) et doit être déplacée entre une position fermée et une position ouverte de rangement et où l'élément d'étarichéité (11) est maintenu sur une partie de tringle (4) de la tringle de capote (2) et le tissu de recouvrement de capote (3) peut être bloqué, en même temps que l'élément d'étanchéité (11) dans un espace de logement (8) dans une partie de tringle (4) de la tringle de capote (2), grâce à une liaison par forme de manière telle qu'au moins un crochet de blocage (13, 14) dans l'espace de logement (8) agrippe grâce à une liaison par forme non seulement un listel de tissu (12); lequel est attaché au tissu de recouvrement de capote (3), mais également l'élément d'étanchéité (11), **caractérisée en ce qu'**un grand nombre de crochets de blocage (13, 14) sont disposés dans l'espace de logement (8) afin de bloquer l'élément d'étanchéité (11) et le listel de tissu (12) et **en ce que** les crochets de blocage (13, 14) pénètrent, en position de montage, dans des épaulements (17) de l'élément d'étanchéité (11) et dans des passages (16) du listel de tissu (12).

2. Capote souple de véhicule automobile selon la revendication 1, **caractérisée en ce qu'**au moins un autre crochet de blocage (13, 14) est disposé sur la paroi intérieure opposée de l'espace de logement (8).

3. Capote souple de véhicule automobile selon la revendication 1 ou 2, **caractérisée en ce que** le listel de tissu (12) est bloqué entre une paroi latérale extérieure de l'élément d'étanchéité (11) et une paroi intérieure de l'espace de logement (8).

4. Capote souple de véhicule automobile selon l'une quelconque des revendications 1 à 3, **caractérisée en ce que** listel de tissu (12) repose sur un épaulement (17) sur la paroi latérale extérieure de l'élément d'étanchéité (11).

5. Capote souple de véhicule automobile selon l'une quelconque des revendications 1 à 4, **caractérisée en ce que** le listel de tissu (12) est fabriqué en plastique.

6. Capote souple de véhicule automobile selon l'une quelconque des revendications 1 à 5, **caractérisée en ce que** le tissu de recouvrement de capote (3) est cousu avec le listel de tissu (12).

7. Capote souple de véhicule automobile selon l'une quelconque des revendications 1 à 6, **caractérisée en ce que** l'espace de logement (8) est conçu pour le logement par liaison par forme de l'élément d'étanchéité (11) et du tissu de recouvrement de capote (3) dans des montants C (4) de la capote du véhicule (1).
